# EUROPÄISCHE PATENTSCHRIFT

(11) **EP 1 617 517 B1**
(45) Veröffentlichungstag und Bekanntmachung des Hinweises auf die Patenterteilung: **05.11.2008**
(21) Anmeldenummer: 05005669.6
(22) Anmeldetag: 16.03.2005
(51) Int. Cl.: H01R 11/12

(54) **Verbindung zwischen einem Kabelendstück und einem Kabelende**
Connction between a cable end and a terminal
Connexion entre une extremité de câble et une borne

(30) Priorität: 13.07.2004 DE 102004034038; 12.11.2004 JP 2004329536
(43) Veröffentlichungstag der Anmeldung: 18.01.2006
(73) Patentinhaber: Yazaki Europe Ltd., Hemel Hempstead, Hertfordshire HP2 7AU (GB)
(72) Erfinder: Lutsch, Harald Michael, 64331 Weiterstadt (DE); Resman, Ranko, 10000 Zagreb (HR); Buden, Vladimir, 10090 Zagreb (HR); Adzic, Minja, 10000 Zagreb (HR)
(74) Vertreter: Harwardt, Günther

(56) Entgegenhaltungen:
- EP-A- 0 951 098
- FR-A- 2 475 304
- FR-A- 2 629 645
- GB-A- 790 744
- GB-A- 1 443 578
- US-A- 2 740 102
- US-A- 5 364 285

## Beschreibung

Die Erfindung betrifft eine elektrisch leitende Verbindung zwischen einem Kabelendstück aus einem elektrisch leitenden Metall, das ein Anschlussende und Laschen zum Verbinden aufweist, und einem Kabelende, das einen Leiterabschnitt und einen Isolierungsabschnitt mit einer Außenfläche aufweist.

Eine solche Ausführungsform ist beispielsweise aus Patent-Abstract of Japan Nr. 2000285983 bekannt. Der Leiterabschnitt und der Isolierungsabschnitt sind mit dem Kabelendstück über Laschen quetschverbunden (vercrimpt). Die Verbindung zwischen dem Kabelendstück und dem Kabelende ist zusätzlich durch einen Schrumpfschlauch abgedichtet.

Bei Verkabelungen im Motorraum eines Kraftfahrzeuges treten aufgrund der dort herrschenden Temperaturen an den aus Kunststoff bestehenden Isolierungen der Kabel oder aus Kunststoff bestehenden Abdichtungen Erweiterungen auf, die ein Weiterleiten von Feuchtigkeit innerhalb eines Kabels zulassen, so dass Feuchtigkeit ausgehend von der Eintrittstelle an einem Kabelende bis zu den Steckverbindungen und damit den elektrisch leitenden Verbindungen an dem anderen Ende gelangen kann, so dass Störungen eintreten können.

Es ist daher Aufgabe der vorliegenden Erfindung, eine elektrisch leitende Verbindung zwischen einem Kabelendstück und einem Kabelende, das einen Leiterabschnitt und einen Isolierungsabschnitt umfasst, so dicht zu gestalten, dass keinerlei Feuchtigkeit in den Bereich zwischen dem Leiterabschnitt und dem Isolierungsabschnitt gelangen kann.

Das erfindungsgemäße Kabelendstück, das diese Aufgabe löst, ist gekennzeichnet durch
- eine separate Hülse, die
   - aus einem elektrisch leitenden Metall besteht,
   - das Kabelende auf einer vorbestimmten Länge umschließt,
   - mit dem Kabelendstück verbunden ist,
   - ein erstes Ende aufweist, das dem Anschlussende nahe angeordnet ist, und ein zweites Ende aufweist, das dem Anschlussende entfernt angeordnet ist,
   - an ihrem ersten Ende dicht verschlossen ist,
   - in einem Abschnitt zum zweiten Ende hin zwischen sich und der Außenfläche des Isolierungsabschnitts einen ringförmigen Aufnahmeraum bildet,
- eine Dichtungstülle, die
   - zumindest teilweise im Aufnahmeraum angeordnet ist und zwischen der Hülse und der Außenfläche des Isolierungsabschnitts des Kabelendes abdichtet.

Von Vorteil bei dieser Ausbildung ist, dass die Hülse aus Metall eine hermetische Abdichtung erlaubt, indem diese an ihrem ersten Ende hermetisch verschlossen ist und an ihrem zweiten Ende eine zumindest über einen erheblichen Teilbereich der Länge innerhalb der Hülse sich erstreckende Dichtungstülle aufweist, die zur Außenfläche des Isolierungsabschnittes des Kabelendes abdichtet. Die Dichtungstülle liegt geschützt mit einem zumindest wesentlichen Teil ihrer Länge innerhalb der aus einem Metall bestehenden Hülse. Durch die unlösbare Verbindung zwischen der aus einem Metall bestehenden Hülse und dem ebenfalls aus Metall bestehenden Kabelendstück wird neben der Abdichtung eine hervorragende elektrische Leitfähigkeit zu dem Leiterabschnitt des Kabelendes erzielt. Das Anschlussende des Kabelendstücks kann vorzugsweise als Öse oder Gabel gestaltet sein.

Eine erste Ausführungsform der Hülse sieht vor, dass diese einen ersten Hülsenabschnitt umfasst, der einen ersten Bohrungsabschnitt aufweist, der durchmessermässig an den Leiterabschnitt des Kabelendes angepasst ist, und einen zweiten Hülsenabschnitt aufweist, der mit einem zweiten Bohrungsabschnitt den Aufnahmeraum zusammen mit der Außenfläche des Isolierungsabschnittes des Kabelendes für die Dichtungstülle bildet.

Eine günstige Verbindung zwischen der Hülse und dem Kabelendstück wird dadurch erzielt, dass der den Leiterabschnitt aufnehmende Hülsenabschnitt mit dem Kabelendstück über die Laschen verbunden ist. Eine günstige Ausbildung ergibt sich ferner dadurch, dass die Hülse an ihrem ersten Ende geschlossen gefertigt ist. Die Hülse ist lediglich an ihrem zweiten Ende offen. Durch diesen Bereich tritt das Kabelende in die Hülse ein, wobei dann über die Dichtungstülle eine hermetische Abdichtung zwischen der Hülse und der Außenfläche des Isolierungsabschnitts des Kabelendes erzielt wird.

Bei einer ersten Ausführungsform ist vorgesehen, dass der Leiterabschnitt unmittelbar durch die Laschen mit dem Kabelendstück quetschverbunden wird. Dabei ist die Hülse über die Laschen hinweg in Richtung zum Anschlussende vorstehend über die Laschen geschoben und an einen Übergangsabschnitt zwischen den Laschen und dem Anschlussende des Kabelendstücks dicht anliegend verformt. Die Verbindung der Hülse und der Laschen mit dem Leiterabschnitt des Kabelendes erfolgt durch Quetschverformen des Überdeckungsabschnittes zwischen der Hülse und den Laschen. Vorzugsweise ist die hermetische Abdichtung am ersten Ende der Hülse dadurch erzielt, dass der an den Übergangsabschnitt anliegende Abschnitt der Hülse mit dem Übergangsabschnitt einen dichten Abschluss am ersten Ende zum Kabelendstück bildend unlösbar verschweißt ist.

Eine besonders günstige Bauform ergibt sich insbesondere mit einer gestuft ausgebildeten Hülse, die an ihrem ersten Ende geschlossen ist, wobei sich an das geschlossene erste Ende der Hülse ein abgeplatteter Abschnitt anschließt, der mit dem Kabelendstück durch Schweißen unlösbar verbunden ist. Die Hülse ist zweckmäßigerweise bereits vor dem Verbinden gestuft ausgebildet. Die Hülse wird ansonsten nur über die Laschen mit dem Kabelendstück so verbunden, dass keine die Verbindung zu dem Leiterabschnitt erzielende Quetschverbindung bewirkt wird. Eine elektrisch leitende Verbindung wird zwischen dem Leiterabschnitt und dem ersten Hülsenabschnitt dadurch erzielt, dass ein Verquetschen des ersten Hülsenabschnittes zum Leiterabschnitt erfolgt. Durch diese Bauweise ist es möglich, dass die Hülse und das Kabelendstück bereits vor dem Verbinden mit dem Kabelende miteinander verbunden sein können. Vorzugsweise unterscheiden sich der erste Hülsenabschnitt und der zweite Hülsenabschnitt auch außen durchmessermäßig voneinander. Eine andere günstige Ausgestaltung der Erfindung sieht vor, dass die Hülse durch die Laschen des Kabelendstücks mit dem in der Hülse einsitzenden Leiterabschnitt quetschverbunden ist.

Günstig ist ebenfalls, wenn die Hülse und das Kabelendstück aus dem gleichen Metall, beispielsweise einem Kupferwerkstoff, bestehen. Das Kabelendstück kann einen Ösen- oder Gabelabschnitt zum Verbinden aufweisen.

Ein Ausgestalltung der Erfindung betrifft ferner eine Dichtungstülle, die allgemein mit einem Kabelende, dass durch eine Bohrung eines Bauelementes hindurchgeführt ist, einsetzbar ist, um eine Abdichtung zwischen dem Kabelende und der Bohrung des Bauelementes zu erzielen. Sie ist jedoch insbesondere günstig im Zusammenhang mit einer Verbindung zwischen einem Kabelendstück und einem Kabelende gemäß dieser Erfindung. Die Dichtungstülle löst insbesondere die Aufgabe, zu verhindern, dass die nach dem Einpressen in eine Einführbohrung oder den Aufnahmeraum der Hülse wieder austreten kann, d.h. sich von dieser löst. Dies geschieht beispielsweise aufgrund der Einsatzbedingungen oder aufgrund der Rückstellkräfte, die sich beim Einpressen der Dichtungstülle aufbauen.

Die Dichtungstülle dient insbesondere dazu, eine dichte und sichere Verbindung zu einer Einführbohrung bzw. zum Aufnahmeraum der Hülse gemäß der Erfindung zu erzielen.

Gelöst wird diese Aufgabe in eines Ausgestalltung der Erfindung durch eine Dichtungstülle aus einem weich elastischen Material für einen elektrischen Kabelabschnitt, der einen Leiterabschnitt und einen diesen umhüllenden Isolierungsabschnitt mit einem vorgegebenen Außendurchmesser aufweist, welche zur Abdichtung des Kabelabschnitts gegenüber einem eine Einführbohrung aufweisenden Bauteil dient, in welche der Kabelabschnitt eingeführt wird, umfassend
- einen rohrförmigen Abschnitt,
   - der sich entlang einer Längsachse zwischen einem ersten Ende und einem zweiten Ende erstreckt,
   - der eine Außenfläche aufweist, die mit entlang der Längsachse verteilten und um die Außenfläche umlaufenden ringförmigen ersten Dichtwülsten versehen ist,
   - der eine durchgehende Bohrung aufweist, die mit entlang der Längsachse verteilten und ringförmig umlaufenden und auf die Längsachse vorstehende zweiten Dichtwülsten versehen ist, wobei
der rohrförmige Abschnitt zu seinem ersten Ende hin mit Mitteln versehen ist, die einen Anschlag mit einem kreisrunden Durchlass bilden, der im Durchmesser kleiner bemessen ist als der Außendurchmesser des lsolierungsabschnittes des Kabelabschnittes.

Durch den Anschlag wird die Dichtungstülle am Ende des Kabelabschnitts (nachfolgend kurz als Kabelende bezeichnet) festgehalten. Sie stützt sich an der Endlfäche des Isolierungsabschnittes des Kabelendes ab. Der Leiterabschnitt tritt durch den Anschlag hindurch und ist beispielsweise mit einem Kabelendstück unmittelbar verbunden. Er kann aber auch günstig in der Form mit dem Kalbendstück verbunden sind, wie es im Zusammenhang mit dieser Erfindung vorangehend beschrieben ist.

In Ausgestaltung der Erfindung ist vorgesehen, dass der Anschlag durch einen einstückig angeformten und in der Bohrung auf die Längsachse vorstehenden umlaufenden Kragen gebildet ist. Dies ist immer dann ausreichend, wenn der Kragen eine genügend große Steifigkeit aufweist, bzw. die Kräfte, die die Dichtungstülle austreten lassen wollen, geringer sind. Vorzugsweise ist jedoch vorgesehen, dass der Anschlag durch einen in den rohrförmigen Abschnitt teilweise eingeformten und in der Bohrung auf die Längsachse vorstehenden Ring gebildet ist, der aus einem Material besteht, das gegenüber dem Material, aus dem der rohrförmige Abschnitt hergestellt ist, eine größere Härte aufweist.

Eine weitere Möglichkeit besteht darin, dass der Anschlag dadurch gebildet ist, dass der rohrförmige Abschnitt zum ersten Ende hin mit einem Verstärkungsring versehen ist, der den rohrförmigen Abschnitt im Durchmesser partiell reduziert.

Für den Fall, dass ein Ring mit eingeformt wird, ist vorgesehen, dass dieser als flache Scheibe ausgebildet ist, die beispielsweise aus einem harten Kunststoff, insbesondere PBT oder PA oder Metall besteht.

Für den Fall des Anbringens eines Verstärkungsringes, ist vorgesehen, dass dieser die Form eines flachen Ringes oder Drahtringes aufweist. Er kann dabei aus einem Kunststoff oder Metall bestehen.

Um das Einpressen der Dichtungstülle begrenzen zu können, ist vorgesehen, dass an das zweite Ende des rohrförmigen Abschnitts ein nach außen von der Längsachse weg vorstehender Ringkragen einstückig angeformt ist. Das Einführen des rohrförmigen Abschnitts kann erleichtert werden, wenn an dessem ersten Ende eine kegelige Einführfläche vorgesehen ist.

Günstig ist die Anwendung der vorbeschriebenen Dichtungstülle bei einer Verbindung entsprechend dieser Erfindung, wobei sie die dabei vorgesehene Dichtungstülle bildet. In diesem Fall bildet der Aufnahmeraum der Hülse die Einführbohrung für die Dichtungstülle.

Verschiedene Ausführungsbeispiele der Erfindung sind in den Zeichnungen schematisch dargestellt und werden nachfolgend anhand derselben näher erläutert.

Es zeigt
- Figur 1: eine Explosionsdarstellung der zu einer ersten Ausführungsform einer elektrisch leitenden Verbindung gemäß der Erfindung zwischen einem Kabelendstück und einem Kabelende gehörenden Bauteile, und zwar vor dem Verbinden derselben,
- Figur 2: die aus Figur 1 ersichtlichen Bauteile im verbundenen Zustand, und zwar im Längsschnitt,
- Figur 3: die Verbindung im Endzustand, perspektivisch dargestellt,
- Figur 4: eine zweite Ausführungsform einer erfindungsgemäßen elektrisch leitenden Verbindung, wobei eine gestufte Hülse genutzt wird und die zu der Verbindung gehörenden Bauteile vor dem Montieren in einer Explosionsdarstellung dargestellt sind,
- Figur 5: die Ausführungsform gemäß Figur 4 im verbundenen Zustand der Bauteile, wobei jedoch eine perspektivische Darstellung im Schnitt gewählt ist,
- Figur 6: eine perspektivische Darstellung der Verbindung im Endzustand,
- Figur 7: eine Explosionsdarstellung der zu einer dritten Ausführungsform einer elektrisch leitenden Verbindung gemäß der Erfindung zwischen einem Kabelendstück und einem Kabelende gehörenden Bauteile, und zwar vor dem Verbinden derselben,
- Figur 8: die aus Figur 7 ersichtlichen Bauteile im verbundenen Zustand, und zwar im Längsschnitt,
- Figur 9: die Verbindung im Endzustand, perspektivisch dargestellt,
- Figur 10: einen Schnitt durch die erfindungsgemäße Dichtungstülle sowie durch ein Bauelement, in dem diese montiert werden soll und ein Kabelende, von dem endseitig der Isolierungsabschnitt entfernt ist, so dass der Leiter freigelegt ist, und zwar vor dem Verbinden der Bauteile,
- Figur 11: die aus Figur 10 ersichtlichen Bauteile im montierten Zustand,
- Figur 12: eine perspektivische Schnittdarstellung einer Ausführungsform einer zu der gemäß Figuren 10 und 11 abgewandelten Dichtungstülle und
- Figur 13: eine perspektivische Schnittansicht einer weiteren Ausführungsform einer Dichtungstülle.

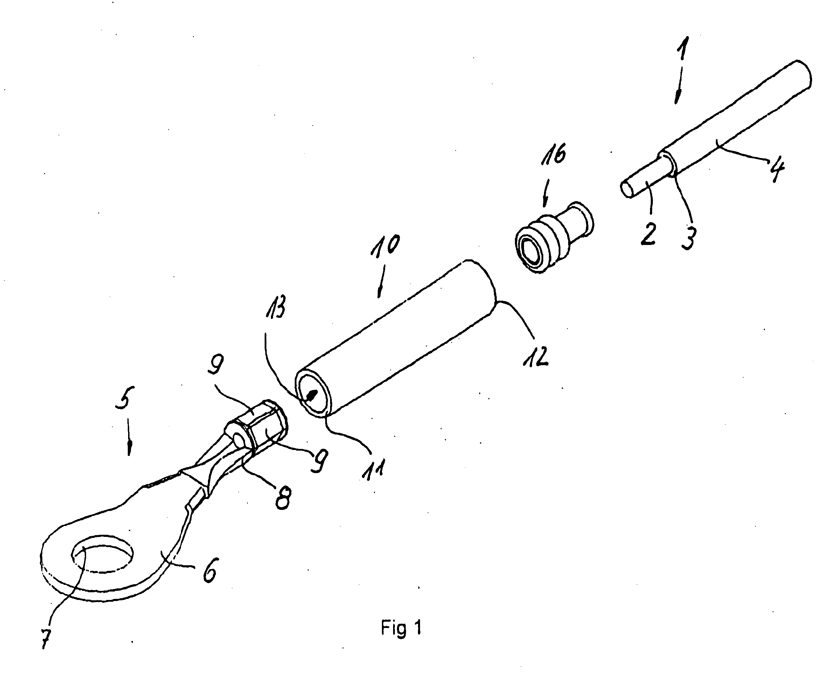

Zunächst erfolgt eine Beschreibung der Verbindung gemäß der ersten Ausführungsform anhand der Figuren 1 bis 3. Aus Figur 1 sind in noch unverbundenem Zustand das Kabelende 1 mit dem freigelegten Leiterabschnitt 2 und dem Isolierungsabschnitt 3 mit der Außenfläche 4 ersichtlich. Der Leiterabschnitt 2 kann beispielsweise aus mehreren Litzen bestehen.

Ferner ist das Kabelendstück 5 ersichtlich, das ein Anschlussende 6 in Form einer Öse aufweist. Das Anschlussende 6 besitzt daher eine durchgehende Bohrung 7. An das Anschlussende 6 schließt sich das Verbindungsende 8 an, das mit Laschen 9 versehen ist, die bereits vorgebogen sind, so dass ein im wesentlichen hohlzylindrischer Abschnitt entsteht, der eine Eintrittsbohrung für den Leiterabschnitt 2 des Kabelendes 1 bildet. Das Anschlussende 6 ist zum Verbindungsende 8 mit den Laschen 9 vorzugsweise leicht abgekröpft gestaltet.

Ferner ist eine Hülse 10 ersichtlich, die über die Laschen 9 und damit den Verbindungsabschnitt 8 geschoben wird. Die Hülse 10 besteht ebenfalls wie das Kabelendstück 5 aus einem Metall. Beide bestehen vorzugsweise aus dem gleichen Werkstoff, wobei vorzugsweise ein Kupferwerkstoff infrage kommt.

Das Anschlussende 6 dient vorzugsweise zur Festlegung an einem Gerät oder eines Ausrüstungsteils eines Kraftfahrzeuges, beispielsweise im Motorraum desselben.

Die Hülse 10 weist ein erstes Ende 11 und ein zweites Ende 12 sowie die durchgehende Bohrung 13 auf. Schließlich ist auch noch die Dichtungstülle 16 ersichtlich, die beispielweise aus einem Gummiwerkstoff oder Kunststoffwerkstoff hergestellt ist und Dichtungswülste sowie eine durchgehende Bohrung aufweist. Durch diese Dichtungstülle 16 tritt das Kabelende 1 hindurch, wobei die Dichtungstülle 16 in der Bohrung 13 zum zweiten Ende 12 der Hülse 10 hin dichtend zu sitzen kommt und dichtend auf der Außenfläche 4 des Isolierungsabschnitts 3 des Kabelendes 1 sitzt.

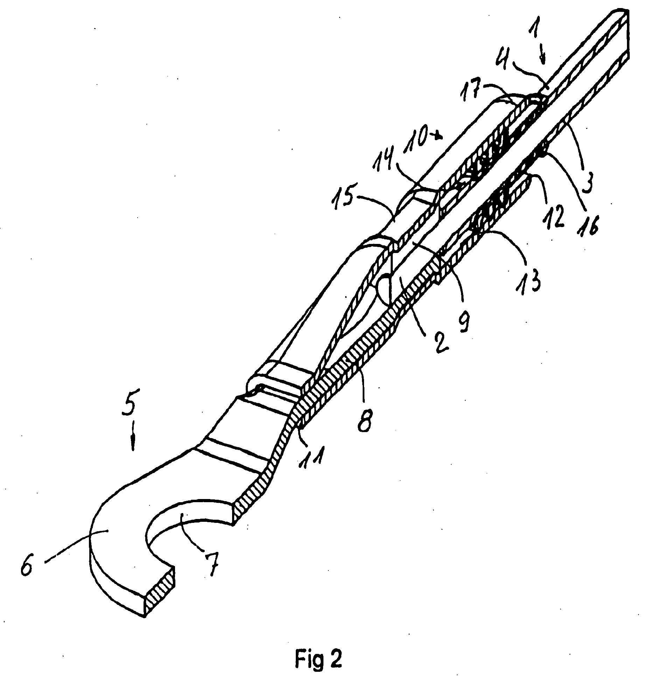

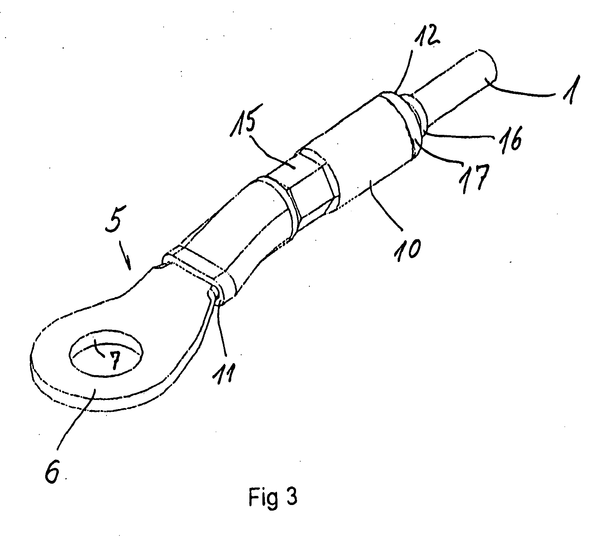

Wie aus Figur 2 ersichtlich, sitzt im montierten Zustand das Kabelende 1 in der Hülse 10 derart, dass der Leiterabschnitt 2 in den durch die Laschen 9 gebildeten Bohrungsabschnitt des Kabelendstücks 5 einsitzt. Die Hülse 10 ist so weit aufgeschoben, dass sie die Laschen 9 und einen weiteren Teil des Verbindungsendes 8 in Richtung zum Anschlussende 6 des Kabelendstücks 5 überdeckt. Zwischen der Wand der Bohrung 13 der Hülse 10 und der Außenfläche 4 des Isolierungsabschnittes 3 des Kabelendes 1 ist ein Aufnahmeraum 14 gebildet, in dem die Dichtungstülle 16 zumindest mit einem Teil ihrer axialen Länge einsitzt. Die Hülse 10 überdeckt eine vorbestimmbare Länge des Kabelendes 1, insbesondere jedoch mit einer Länge, die gewährleistet, dass die auf dem Isolierungsabschnitt 3 sitzende Dichtungstülle 16 sicher in der Hülse 10 aufgenommen und gehalten ist. Es ist in den Figuren 2 und 3 erkennbar, dass ein geringerer Längenabschnitt der Dichtungstülle 16 axial nach hinten über das zweite Ende 12 der Hülse 10 vorragt. Zum ersten Ende 11 hin ist die Hülse 10 abgeplattet, so dass sie sich eng an das Verbindungsende 8 bzw. den Übergangsabschnitt zwischen diesem und dem Anschlussende 6 hin anlegt. Zusätzlich sind beide Teile miteinander verschweißt, und zwar insbesondere durch Widerstandsschweissung. Die elektrisch leitende Verbindung zwischen dem Kabelendstück 5 und dem Leiterabschnitt 2 wird dadurch hergestellt, dass sowohl die Hülse 10 als auch die Laschen 9 im Bereich deren Überdeckung, d.h. im Quetschabschnitt 15 miteinander und dem Leiterabschnitt 2 quetschverbunden sind.

Zusätzlich ist zum zweiten Ende 12 hin ein Halteabschnitt 17 vorgesehen, der durch eine radiale Verformung, d.h. Querschnittsverringerung des Bereiches zum zweiten Ende 12 hin erzielt wird, so dass gewährleistet ist, dass die Dichtungstülle 16 sicher in der Hülse 10 gehalten ist und die entsprechende Anpressung zur Erzielung einer dichten Verbindung erreicht wird.

Die Erfindung sieht also einen hermetischen Abschluss der Hülse 10 an ihrem ersten Ende 11 durch Verquetschen und Verschweißen mit dem Kabelendstück 5 und am anderen Ende eine hermetische Abdichtung zum Isolierungsabschnitt 3 des Kabelendes 1 mittels der Dichtungstülle 16 vor. Dabei ist die Dichtungstülle 16 geschützt in der Hülse 10 untergebracht. Die Überdeckung zwischen der Hülse 10 und dem Isolierungsabschnitt 3 sowie die Länge der Dichtungstülle 16 können so gewählt werden, dass auch bei Temperatureinflüssen auf den Isolierungsabschnitt 3 keine undichte Stelle im Bereich des zweiten Endes 12 entsteht, die ein Eintreten von Feuchtigkeit ermöglichen würde.

Es ist nur ein Kabelende 1 eines Kabels dargestellt. Das andere Ende des Kabels, zu dem das Kabelende 1 gehört, kann mit einer ähnlichen Verbindung versehen sein oder aber beispielsweise zu einem Stecker gehören, der mit einem Gerät innerhalb eines Kraftfahrzeuges verbunden ist. Für Kraftfahrzeuge ist es wichtig, dass es insbesondere bei der erheblichen Anzahl von elektronischen Ausrüstungen nicht zu Fehlfunktionen kommt. Dies betrifft insbesondere für die Sicherheit der Handhabung und den Betrieb des Fahrzeugs relevante Steuerungseinrichtungen.

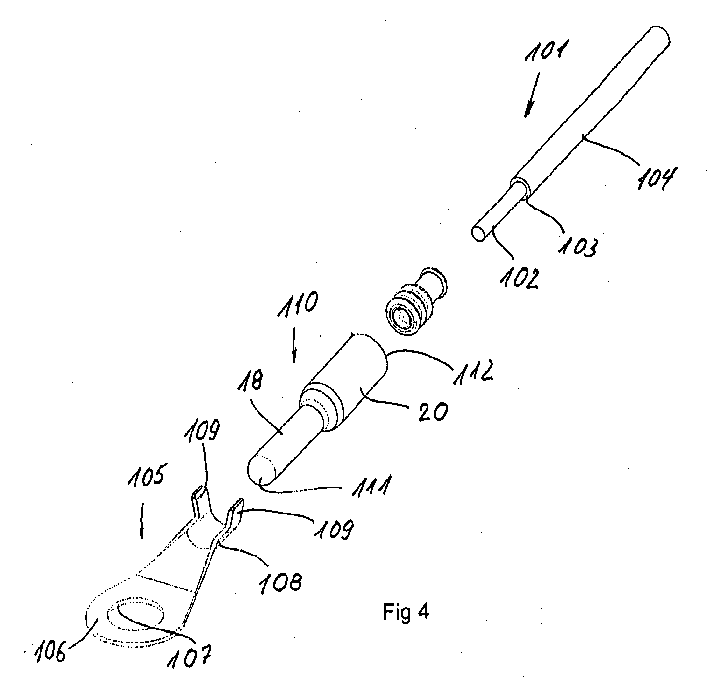

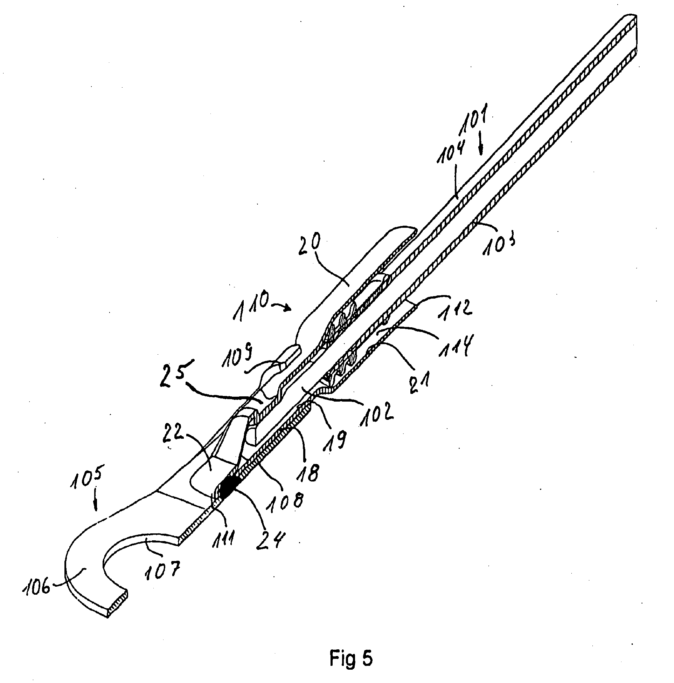

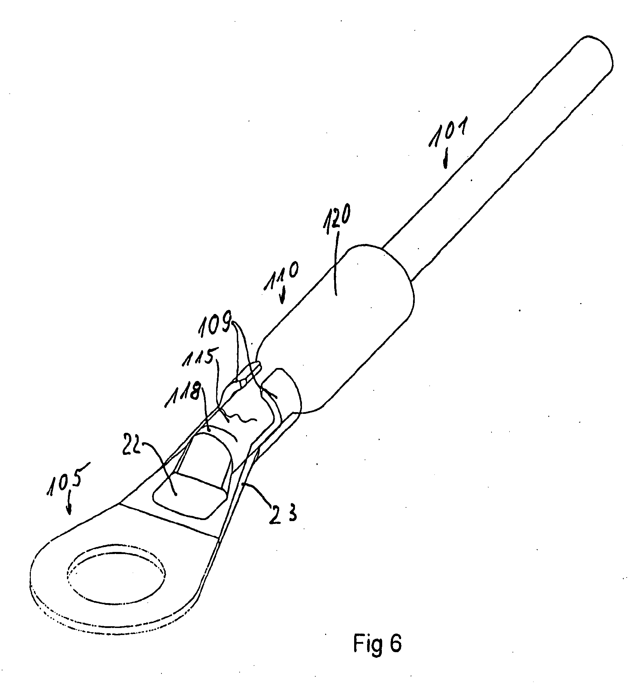

Eine besonders günstige Ausführungsform ist in den Figuren 4 bis 6 dargestellt und anhand derselben näher erläutert. Dabei zeigt Figur 4 eine Explosionsdarstellung der in der Verbindung zusammenzufassenden Bauteile vor dem Verbinden, während die Figuren 5 und 6 den Zustand nach dem Verbinden bzw. den Fertigzustand der Verbindung darstellen.

Aus Figur 1 ist das Kabelende 101 mit dem freigelegten Leiterabschnitt 102 und dem Isolierungsabschnitt 103 ersichtlich. Der Isolierungsabschnitt 103 weist die Außenfläche 104 auf. Ferner ist das Kabelendstück 105 ersichtlich, das ein Anschlussende 106 mit der Bohrung 107 aufweist. Das Anschlussende 106 weist also Ösenform auf. Insgesamt ist das Kabelendstück 105 aus einem Flachmaterial, beispielsweise Kupferblech, durch Ausstanzen und Biegen hergestellt. An das Anschlussende 106 schließt sich das Verbindungsende 108 an, zu dem die Laschen 109 gehören. In Figur 4 sind die Laschen 109 so vorgebogen, dass sie eine Art U-Form bilden.

Die Hülse 110 ist gestuft ausgebildet. Sie weist ein erstes Ende 111 und ein zweites Ende 112 auf. Das erste Ende 111 ist geschlossen. Es gehört zu einem ersten Hülsenabschnitt 18, der einen ersten Außendurchmesser aufweist, der geringer ist als der Außendurchmesser des daran anschließenden und vom ersten Ende 111 weggerichteten zweiten Hülsenabschnitts 20. An den ebenfalls zylindrisch gestalteten zweiten Hülsenabschnitt 20 schließt sich zum zweiten Ende 112 hin ein nicht dargestellter auswärts gerichteter Kragen an. Ferner ist die Dichtungstülle 116 ersichtlich, die so gestaltet sein kann wie die Dichtungstülle 16 entsprechend der Ausführungsform nach den Figuren 1 bis 3.

Aus den Figuren 5 und 6 ist der verbundene Zustand ersichtlich. Es ist erkennbar, dass der erste Hülsenabschnitt 18 zwischen den nunmehr verformten und an dessen Außenkontur anliegenden Laschen 109 gehalten ist. Ferner ist der Hülse 110 zum ersten Ende 111 hin ein abgeplatteter Abschnitt 22 angeformt, der mit dem Anschlussende 106 des Kabelendstücks 105 durch Widerstandsschweißung verbunden ist. Bei der vorliegenden Ausführungsform entsteht die geschlossene Ausbildung und hermetische Abdichtung am ersten Ende 111 nicht durch die Schweißverbindung, sondern dadurch, dass die Hülse 110 schon im Fertigungszustand an dem ersten Ende 111 geschlossen ist. Die Hülse 110 ist nur am zweiten Ende 112 offen. Im Bereich des ersten Hülsenabschnittes 18 befindet sich der erste Bohrungsabschnitt 19, der hinsichtlich seines Durchmessers dem Querschnitt des Leiterabschnitts 102 angepasst ist. Im verbundenen Zustand befindet sich der Leiterabschnitt 102 im ersten Bohrungsabschnitt 19. Der zweite Hülsenabschnitt 20 weist einen zweiten Bohrungsabschnitt 21 auf, dessen Durchmesser im Verhältnis zum ersten Bohrungsabschnitt 19 größer bemessen ist und im Verhältnis zur Außenfläche 104 des Kabelendes 101, das in dem zweiten Hülsenabschnitt 20 aufgenommen ist, einen ringförmigen Aufnahmeraum 114 für die Dichtungstülle 116 freilässt. Ein nicht dargestellter Kragen am zweiten Ende 112 der Hülse kann das Einführen der Dichtungstülle 116 in den zweiten Bohrungsabschnitt 21 der Hülse 110 erleichtern. Eine elektrisch leitende Verbindung zwischen dem Leiterabschnitt 102 und dem Kabelendstück 105 wird unter Vermittlung der Hülse 110 erzielt, indem eine Verquetschung (25) des ersten Hülsenabschnitts 18 im Bereich zwischen den Laschen 109 und dem abgeplatteten Abschnitt 22 vorgenommen wird. Zwischen dem Anschlussende 106 bzw. dem Kabelendstück 105 und der Hülse 110 ist über die stoffschlüssige Verbindung infolge der Verschweißung des abgeplatteten Abschnittes 22 mit dem Anschlussende 106 eine günstige elektrisch leitende Verbindung erzielt. Es ist aus Figur 6 erkennbar, dass das Anschlussende 106 zu dem Verbindungsende 108 im Kröpfungsabschnitt 23 abgekröpft ist.

Anders als bei der Ausführungsform gemäß Figuren 1 bis 3 wird bei der Ausführungsform gemäß Figuren 4 bis 6 am ersten Ende ein hermetischer Abschluss schon dadurch erzielt, dass die Hülse 110 am ersten Ende 111 geschlossen ausgebildet ist. Gezielt abzudichten ist lediglich der Freiraum zwischen dem zweiten Hülsenabschnitt 20 und dem Isolierungsabschnitt 103 des Kabelendes 101. Dies kann, wie schon im Zusammenhang mit der Ausführungsform gemäß Figuren 1 bis 3 beschrieben, durch eine entsprechende Gestaltung und Einspannung der Dichtungstülle 116 zwischen dem zweiten Hülsenabschnitt 20 und der Außenfläche 104 des Isolierungsabschnittes 103 des Kabelendes 101 geschehen. Anders als bei der Ausführungsform gemäß Figuren 1 und 3 ist bei der Ausführungsform gemäß Figuren 4 bis 6 die Dichtungstülle 116 mit ihrer vollen Länge in die Hülse 110 eingeführt.

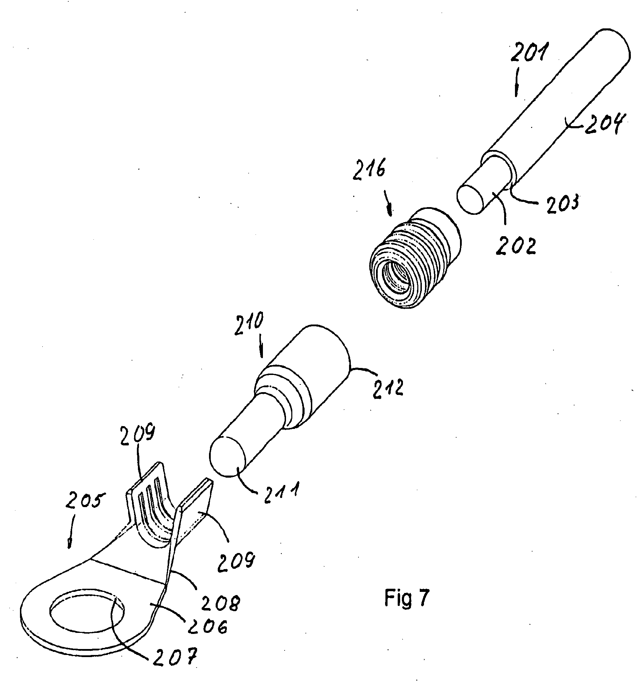

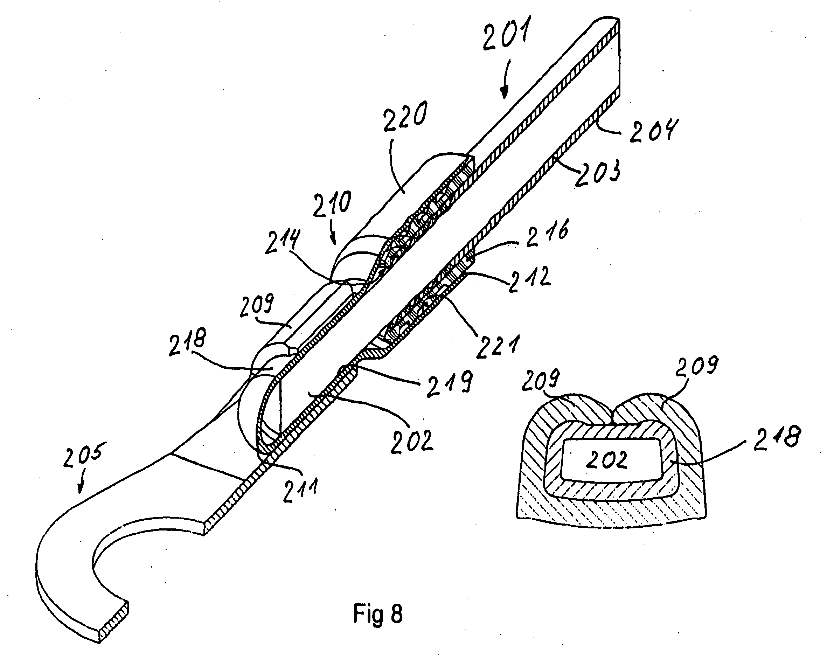

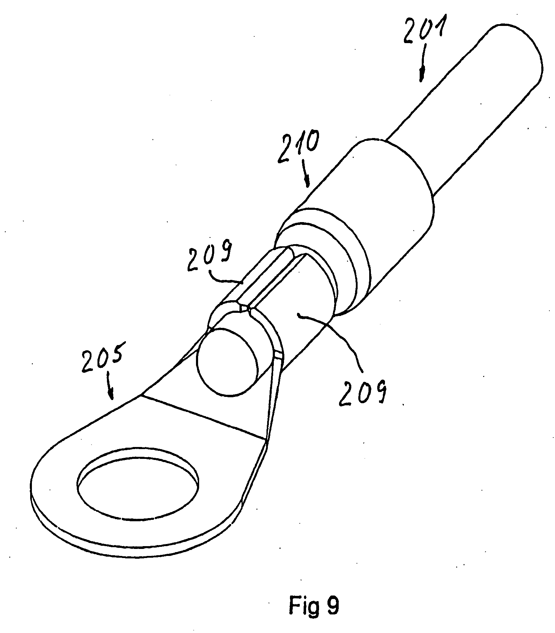

Eine dritte günstige Ausführungsform ist in den Figuren 7 bis 9 dargestellt und anhand derselben nachfolgend erläutert. Während Figur 7 die zu der Verbindung gehörenden Bauteile im noch unverbundenen Zustand darstellt, zeigen die Figuren 8 und 9 den verbundenen Zustand, d.h. den Fertigzustand der Verbindung.

In Figur 7 ist das Kabelende 201 mit dem freigelegten Leiterabschnitt 202 an einem Ende und dem auf dem übrigen Bereich vorgesehenen Isolierungsabschnitt 203 mit der Außenfläche 204 erkennbar. Dieses Kabelende 201 soll mit einem Kabelendstück 205 verbunden werden, das ein als Öse gestaltetes Anschlussende 206 mit der Bohrung 207 aufweist. Es umfasst ferner ein Verbindungsende 208, das mit Laschen 209 versehen ist, die zusammen ein U bilden. Ferner ist eine entsprechend der zweiten Ausführungsform gestaltete Hülse 210 vorgesehen, die gestuft ausgebildet ist und an ihrem ersten Ende 211 geschlossen und an ihrem zweiten Ende 212 offen ausgebildet ist. Zu der Verbindung gehört ferner die Dichtungstülle 216, die in die Hülse 210 eintritt und zur Hülse 210 einerseits und zur Außenfläche 204 des eingeschobenen Kabelendes 201 andererseits dichtet. Wie insbesondere aus Figur 8 ersichtlich, ist die Hülse 210 gestuft ausgebildet. Sie weist einen im Durchmesser an den Leiterabschnitt 202 angepassten ersten Hülsenabschnitt 218 auf, dessen an den Durchmesser des Leiterabschnittes 202 angepasster erster Bohrungsabschnitt 219 den Leiterabschnitt 202 aufnimmt. Die Hülse 210 ist an ihrem ersten Ende 211, d.h. am Ende des ersten Hülsenabschnitts 218, geschlossen ausgebildet. An den ersten Hülsenabschnitt 218 schließt sich ein im Durchmesser zum ersten Hülsenabschnitt 218 vergrößerter zweiter Hülsenabschnitt 220 an. In diesen reicht das Kabelende 201 mit seinem mit dem Isolierungsabschnitt 203 versehenen Abschnitt hinein, wobei der zweite Bohrungsabschnitt 221 im zweiten Hülsenabschnitt 220 so groß bemessen ist, das zur Außenfläche 204 des Isolierungsabschnitts 203 ein Aufnahmeraum 214 verbleibt. In diesen Aufnahmeraum 214, der einen Ringraum bildet, sitzt die Richtungstülle 216 dergestalt, dass sie einerseits zum zweiten Hülsenabschnitt 220, d.h. zur Innenfläche des zweiten Bohrungsabschnittes 221 und andererseits zur Außenfläche 204 des Isolierungsabschnittes 203 des Kabelendes 201 abdichtet.

Die elektrisch leitende und ansonsten mechanische Verbindung wird mit dem Kabelendstück 205 dadurch erzielt, dass der den Leiterabschnitt 202 aufnehmende erste Hülsenabschnitt 218 zwischen den Laschen 209 aufgenommen wird. Diese werden dann verquetscht, wie sich insbesondere aus der Querschnittsdarstellung gemäß Figur 8 ergibt. Durch das Verquetschen wird einerseits eine mechanische und elektrisch leitende Verbindung zwischen dem Kabelendstück 205 erzielt. Andererseits wird durch das Verquetschen der Laschen 209 des Kabelendstückes 205 der erste Hülsenabschnitt 218 der Hülse 210 so verformt, dass er mit dem Leiterabschnitt 202 quetschverbunden wird. Hierdurch ergibt sich ebenfalls eine elektrisch leitende Verbindung zwischen der Hülse 210 und dem Leiterabschnitt 202. Die Verbindung zwischen dem Kabelendstück 205, der Hülse 210 und dem Leiterabschnitt 202 kann dabei durch einen Arbeitsgang, d.h. durch Quetschverformen der Laschen 209 erfolgen.

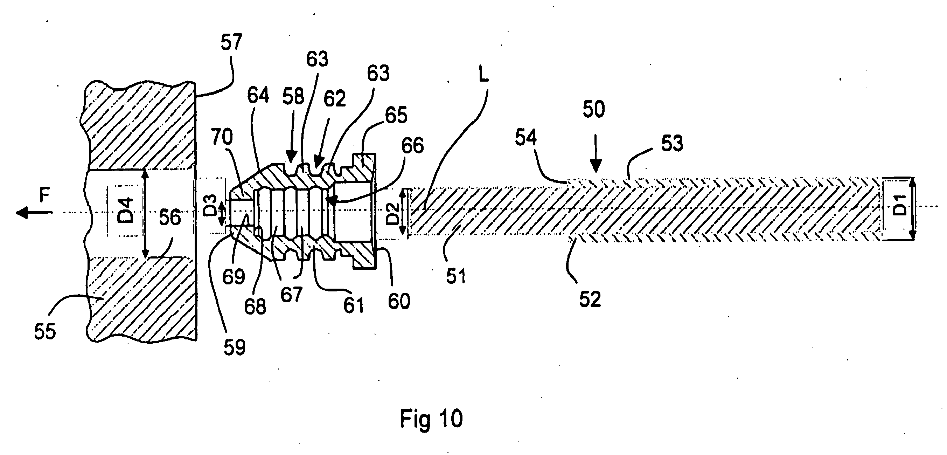

Figur 10 zeigt ein Kabelende 50 eines Kabels, das den Leiterabschnitt 51 mit dem Durchmesser D2 aufweist. Der Leiterabschnitt 51 liegt frei, d.h. auf diesem Abschnitt ist der Isolierungsabschnitt 52 entfernt. Die Außenfläche des Isolierungsabschnittes 52 ist mit 53 bezeichnet und er weist den Durchmesser D1 auf. Der Durchmesser D1 ist größer als der Durchmesser D2, so dass sich am Ende des Isolierungsabschnittes 52 eine Endfläche 54 ergibt. Das Kabelende 50 soll in eine Einführbohrung 56 eines Bauteils 55 in Richtung des Pfeiles F ausgehend von der Fläche 57 eingeführt bzw. hindurchgeführt werden. Zur Abdichtung zwischen dem Kabelende 50 und dem Bauteil 55 dient eine Dichtungstülle 58 aus einem weichelastischen Material, beispielsweise Silikongummi. Alle vorgenannten Bauteile sind in Figur 10 auf der Achse L zentriert gezeichnet, und zwar vor der Montage.

Die Dichtungstülle 58 stellt ein erstes Ausführungsbeispiel dar. Sie weist ein erstes Ende 59 und ein zweites Ende 60 auf. Sie umfasst einen rohrförmigen Abschnitt 61, der die Außenfläche 62 besitzt, auf der erste ringförmige Dichtungswülste 63 entlang der Längsachse L verteilt angeordnet sind. Diese Dichtungswülste 63 stehen von der Längsachse L weg vor und dienen zur Anlage an der Wandung der Einführbohrung 56, um eine dichte Verbindung herzustellen. Am ersten Ende 59 weist der rohrförmige Abschnitt 61 der Dichtungstülle 58 eine kegelige Einführfläche 64 auf, um das Einführen in die Einführbohrung 56 zu erleichtern. Am zweiten Ende 60 ist ein Ringkragen 65 vorgesehen, der die Einführtiefe der Dichtungstülle 58 in die Einführbohrung 56 begrenzen soll, indem der Ringkragen 65 zur Anlage gegen die Fläche 57 des Bauteiles 55 kommen soll. Die Dichtungstülle 58 weist eine insgesamt durch den rohrförmigen Abschnitt 61 hindurch verlaufende Bohrung 66 auf. In dieser sind etwa im mittleren Bereich des rohrförmigen Abschnittes 61 zweite Dichtwülste 67 angebracht, die ebenfalls ringförmig um die Längsachse L herum verlaufend in der Bohrung 66 angeordnet sind und voneinander entlang der Längsachse L beabstandet sind. Zum ersten Ende 59 hin ist der rohrförmige Abschnitt 61 nach innen, d.h. auf die Längsachse L zu verdickt, so dass ein Kragen 70 gebildet ist, der einen Durchlass 69 aufweist. Der Durchlass 69 weist den Durchmesser D3 auf. Der Durchmesser D3 des Durchlasses 69 ist an den Durchmesser D2 des Leiterabschnittes 51 des Kabelendes 50 angepasst. Erforderlich ist jedoch nur, dass D3 kleiner als D1 ist, d.h. kleiner als der Außendurchmesser D1 des Isolierungsabschnittes 52 ist. Der Kragen 70 bildet einen Anschlag 68 in Form einer Ringfläche, die dazu bestimmt ist, bei eingeführtem Kabelende 50 in Anlage zur Endfläche 54 des Isolierungsabschnittes 52 zu kommen. Die Bohrung 66 der Dichtungstülle 58 ist hinsichtlich des Durchmessers ihrer zweiten Dichtungswülste 67 so gestaltet, dass diese sich dicht an die Außenfläche 53 des Isolierungsabschnittes 52 des Kabelendes 50 anlegen. Entsprechend ist der freie Durchlass, den sie bilden, kleiner als der Durchmesser D1. Um eine dichte Verbindung zur Einführbohrung 56 herzustellen, ist der Durchmesser des rohrförmigen Abschnittes 61 der Dichtungstülle 58 gemäß über die ersten Dichtungswülste 63 größer als der Durchmesser D4 der Einführbohrung 56.

Bei der Montage wird zunächst die Dichtungstülle 58 auf das Kabelende 50 gesteckt, und zwar so weit, bis der Anschlag 68 des Kragens 70 an der Endfläche 54 des Isolierungsabschnittes 52 anliegt. Dann wird diese Einheit in die Einführbohrung 56 eingeschoben. Der Leiterabschnitt 51 des Kabelendes 50 ragt über das erste Ende 59 der Dichtungstülle 58 vor, so dass er über die der Fläche 57 abgewandte Fläche des Bauteiles 55 vorsteht. Dieses Ende kann mit einem Kabelendstück verbunden sein, um beispielsweise eine leitende Verbindung zu einem weiteren Bauteil zu erzielen. Eine solche Ausführungsform der Dichtungstülle 58 kann zweckmäßig für die in den Figuren 1 bis 9 dargestellte Ausführungsform einer Verbindung und dort insbesondere für die Abdichtung zwischen dem Kabelende und der Hülse vorgesehen sein.

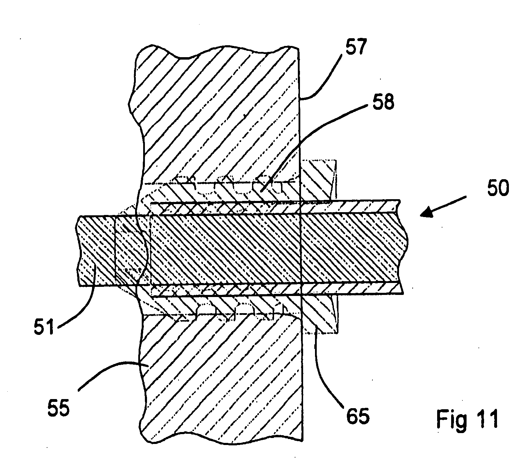

Der Montageendzustand der in Figur 10 dargestellten Bauteile ist aus Figur 11 ersichtlich, wobei die Dichtungstülle 58 im entspannten Zustand dargestellt ist, so dass die Dichtungswülste 63, 67 radial weiter vorragen, als dies im montierten Zustand wirklich der Fall ist. Dabei wird im montierten Zustand der Dichtungstülle 58 verhindert, dass die Rückstellkräfte die beim Einpressen der Dichtungstülle 58 in die Einführbohrung 56 entstehen nicht so wirksam werden können, dass die Dichtungstülle 58 wieder austritt, denn die Dichtungstülle 58 ist am Kabelende 50 festgelegt. Dieses Kabelende 50 ist in der Regel über an den Leiterabschnitt 51 festlegte Bauteile, beispielsweise ein Kabelendstück, so fixiert, dass das Kabelende 50 sich selbst nicht herausbewegen kann. Dies ergibt sich beispielsweise aus der Verbindung zwischen dem Leiterabschnitt mit der Hülse bzw. dem Kabelendstück, wie es im Zusammenhang mit den Figuren 1 bis 9 beschrieben ist. Von Bedeutung ist lediglich, dass das Kabelende 50 über mit dem Leiterabschnitt 51 verbundene Teile festgehalten ist und somit auch die Dichtungstülle 58 festsetzt. Die Dichtungstülle 58 kann aufgrund des Anliegens des Anschlags 68 gegen die Endfläche 54 entlang der Längsachse L keine Bewegung entgegen der Pfeilrichtung F ausführen.

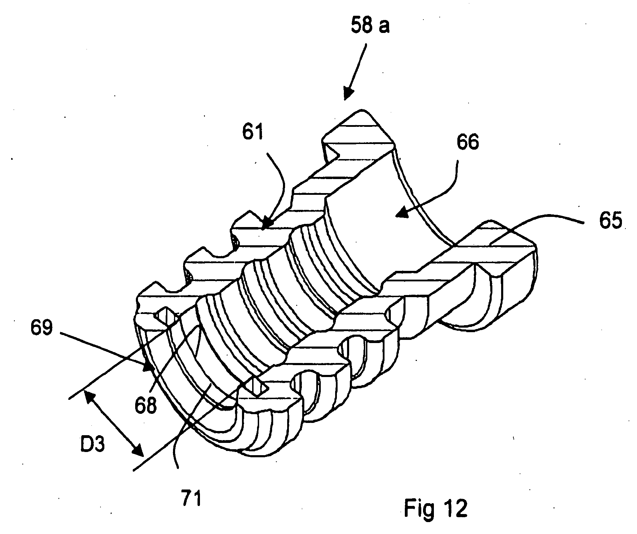

Figur 12 zeigt eine weitere Ausführungsform einer Dichtungstülle 58a, wobei der einzige Unterschied zur Ausführungsform gemäß Figuren 10 und 11 darin besteht, dass der Anschlag 68 Bestandteil eines Ringes 71 ist, der aus einem Material hergestellt ist, das härter ist als das Material, aus dem der rohrförmige Abschnitt 61 der Dichtungstülle 58a hergestellt ist. Es handelt sich beispielsweise um einen Ring 71 aus einem harten Kunststoff, beispielsweise PBT oder PA, besteht. Der Ring 71 ist vorzugsweise teilweise in den rohrförmigen Abschnitt 61 beim Herstellen der Dichtungstülle 58 a eingeformt.

Aus Figur 12 ist ebenfalls erkennbar, dass der Ring 71 so ausgebildet ist, dass ein Durchlass 69 gebildet ist, der den Durchmesser D3 aufweist, welcher kleiner ist als der Außendurchmesser D1, gemessen über die Außenfläche 53 des Isolierungsabschnittes 52 des Kabelendes 50, jedoch größer bemessen als der Außendurchmesser D2 des Leiterabschnittes 51, so dass dieser hindurchtreten kann.

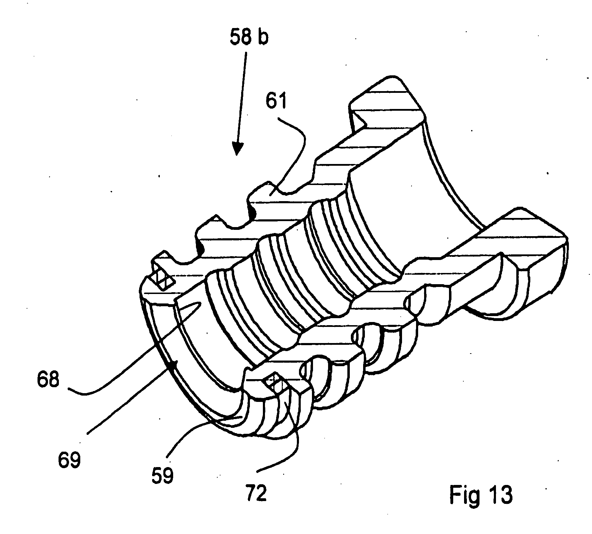

Figur 13 zeigt eine weitere Ausführungsform einer Dichtungstülle 58b, wobei zum ersten Ende 59 hin von außen in eine umlaufende Nut des rohrförmigen Abschnitts 61 ein Verstärkungsring 72 eingesetzt ist, der den freien Durchlass 69 zum ersten Ende 59 hin so verringert, dass eine partielle ringförmige Querschnittsreduzierung eintritt, die den Anschlag 68 darstellt. Dies kann dadurch noch verstärkt werden, dass in diesem Bereich ein kleiner radial nach innen gerichteter Vorsprung gebildet ist, so dass sich ein stärker ausgeprägter Anschlag 68 ergibt. Der Verstärkungsring 71 kann dabei aus einem harten Kunststoff bestehen oder auch als geschnitzter Ring aus einem Metall ausgestanzt sein. Möglich ist auch ein zu einem Ring gebogener Draht, wobei der Verstärkungsring jeweils geschlitzt ist, um ein Auffedern und Einführen in die Nut des rohrförmigen Abschnittes 61 zu ermöglichen.

### Bezugszeichenliste

- 1, 101, 201: Kabelende
- 2, 102, 202: Leiterabschnitt
- 3, 103, 203: Isolierungsabschnitt
- 4, 104, 204: Außenfläche
- 5, 105, 205: Kabelendstück
- 6, 106, 206: Anschlussende
- 7, 107, 207: Bohrung
- 8, 108, 208: Verbindungsende
- 9, 109, 209: Laschen
- 10,110,210: Hülse
- 11, 111, 211: erstes Ende
- 12, 112,212: zweites Ende
- 13: Bohrung
- 14, 114, 214: Aufnahmeraum
- 15, 115, 215: Quetschabschnitt
- 16, 116,216: Dichtungstülle
- 17: Halteabschnitt
- 18, 218: erster Hülsenabschnitt
- 19, 219: erster Bohrungsabschnitt
- 20, 220: zweiter Hülsenabschnitt
- 21, 221: zweiter Bohrungsabschnitt
- 22: abgeplatteter Abschnitt
- 23: Kröpfungsabschnitt
- 24: Schweissung
- 25: Verquetschung

- 50: Kabelende (Kabelabschnitt)
- 51: Leiterabschnitt
- 52: Isolierungsabschnitt
- 53: Außenfläche
- 54: Endfläche des Isolierungsabschnittes
- 55: Bauteil
- 56: Einführbohrung
- 57: Fläche
- 58, 58a, 58b: Dichtungstülle
- 59: erstes Ende
- 60: zweites Ende
- 61: rohrförmiger Abschnitt
- 62: Außenfläche
- 63: erste Dichtwulst
- 64: Einführfläche
- 65: Ringkragen
- 66: Bohrung
- 67: zweite Dichtwulst
- 68: Anschlag
- 69: Durchlass
- 70: Kragen
- 71: Ring
- 72: Verstärkungsring
- D1: Außendurchmesser des Isolierungsabschnitts
- D2: Außendurchmesser des Leiterabschnitts
- D3: Durchmesser des Durchlasses
- D4: Durchmesser der Einführbohrung
- F: Pfeilrichtung
- L: Längsachse

## Patentansprüche

1. Elektrisch leitende Verbindung zwischen einem Kabe!endstück (5, 105, 205) aus einem elektrisch leitenden Metall, das ein Anschlussende (6, 106, 206) und Laschen (9, 109, 209) zum Verbinden aufweist, und einem Kabelende (1, 101, 201), das einen Leiterabschnitt (2, 102, 202) und einen Isolierungsabschnitt (3, 103, 203) mit einer Außenfläche (4, 104, 204) aufweist,
**gekennzeichnet durch**
- eine separate Hülse (10, 110, 210), die
- aus einem elektrisch leitenden Metall besteht,
- das Kabelende (1, 101, 201) auf einer vorbestimmten Länge umschließt,
- mit dem Kabelendstück (5, 105, 205) verbunden ist,
- ein erstes Ende (11, 111, 211) aufweist, das dem Anschlussende (6, 106, 206) nahe angeordnet ist, und ein zweites Ende (12, 112, 212) aufweist, das dem Anschlussende (6, 106, 206) entfernt angeordnet ist,
- an ihrem ersten Ende (11, 111, 211) dicht verschlossen ist,
- in einem Abschnitt zum zweiten Ende hin zwischen sich und der Außenfläche (4, 104, 204) des Isolierungsabschnitts (3, 103, 203) einen ringförmigen Aufnahmeraum (14, 114, 214) bildet,
- eine Dichtungstülle (16, 116, 216), die
- zumindest teilweise im Aufnahmeraum (14, 114, 214) angeordnet ist und zwischen der Hülse (10, 110, 210) und der Außenfläche (4, 104, 204) des Isolierungsabschnitts (3, 103, 203) des Kabelendes (1, 101, 201) abdichtet.

2. Verbindung nach Anspruch 1,
**dadurch gekennzeichnet,**
**dass** das Anschlussende (6, 106, 206) des Kabelendstücks (5, 105, 205) als Öse oder Gabel gestaltet ist.

3. Verbindung nach Anspruch 1,
**dadurch gekennzeichnet,**
**dass** die Hülse (110, 210) einen ersten Hülsenabschnitt (18, 218) umfasst, der einen ersten Bohrungsabschnitt (19, 119) aufweist, der durchmessermäßig an den Leiterabschnitt (102, 202) angepasst ist, und einen zweiten Hülsenabschnitt (20, 220) aufweist, der mit einem zweiten Bohrungsabschnitt (21, 221) den Aufnahmeraum (114, 214) bildet.

4. Verbindung nach Anspruch 3,
**dadurch gekennzeichnet,**
**dass** der den Leiterabschnitt (102, 202) aufnehmende erste Hülsenabschnitt (18, 218) mit dem Kabelendstück (105, 205) über die Laschen (109, 209) verbunden ist.

5. Verbindung nach Anspruch 1,
**dadurch gekennzeichnet,**
**dass** die Hülse (110, 210) an ihrem ersten Ende (111, 211) geschlossen ist.

6. Verbindung nach Anspruch 1,
**dadurch gekennzeichnet,**
**dass** der Leiterabschnitt (2) unmittelbar durch die Laschen (9) mit dem Kabelendstück (5) quetschverbunden ist,
**dass** die Hülse (10) über die Laschen (9) hinweg in Richtung zum Anschlussende (6) vorsteht und an einem Übergangsabschnitt zwischen den Laschen (9) und dem Anschlussende (6) dichtend anliegend verformt ist und
**dass** die Hülse (10) zusammen mit den Laschen in ihrem die Laschen (9) überdeckenden Überdeckungsabschnitt quetschverformt ist.

7. Verbindung nach Anspruch 6,
**dadurch gekennzeichnet,**
**dass** der an dem Übergangsabschnitt anliegende Abschnitt der Hülse (10) mit dem Übergangsabschnitt einen dichten Abschluss am ersten Ende (11) zum Kabelendstück (5) bildend unlösbar verschweißt ist.

8. Verbindung nach Anspruch 5,
**dadurch gekennzeichnet,**
**dass** sich an das geschlossene erste Ende (111) der Hülse (110) ein abgeplatteter Abschnitt (23) anschließt, der mit dem Kabelendstück (105) durch eine Schweißung (24) unlösbar verbunden ist.

9. Verbindung nach Anspruch 3,
**dadurch gekennzeichnet,**
**dass** der erste Hülsenabschnitt (18, 218) und der zweite Hülsenabschnitt (20, 220) sich vor dem Verbinden mit dem Kabelendstück (105, 205) außen durchmessermäßig unterscheiden.

10. Verbindung nach Anspruch 1,
**dadurch gekennzeichnet,**
**dass** die Hülse (10, 110, 210) und das Kabelendstück (5,105, 205) aus dem gleichen Metall bestehen.

11. Verbindung nach Anspruch 3,
**dadurch gekennzeichnet,**
**dass** der Leiterabschnitt (102, 202) mit dem ersten Hülsenabschnitt (18) quetschverbunden ist.

12. Verbindung nach einem der Ansprüche 1 oder 10,
**dadurch gekennzeichnet,**
**dass** das Metall ein Kupferwerkstoff ist.

13. Verbindung nach einem der Ansprüche 1 oder 3,
**dadurch gekennzeichnet,**
**dass** die Hülse (210) durch die Laschen (209) des Kabelendstücks (205) mit dem in der Hülse (210) einsitzenden Leiterabschnitt (202) quetschverbunden ist.

14. Verbindung nach einem der Ansprüche 1 bis 13,
**dadurch gekennzeichnet,**
**dass** eine Dichtungstülle (58, 58a, 58b) aus einem weichelastischen Material für einen elektrischen Kabelabschnitt (50), das einen Leiterabschnitt (51) und einen diesen umhüllenden Isolierungsabschnitt (52) mit einem vorgegebenen Außendurchmesser (D1) aufweist, welche zur Abdichtung des Kabelabschnitts (50) gegenüber einem eine Einführbohrung (56) aufweisenden Bauteil (55) dient, in welche der Kabelabschnitt (50) eingeführt wird, vorgesehen ist,
wobei die Dichtungstülle (58, 58a, 58b) einen rohrförmigen Abschnitt (61) umfasst,
- der sich entlang einer Längsachse (L) zwischen einem ersten Ende (59) und einem zweiten Ende (60) erstreckt,
- der eine Außenfläche (62) aufweist, die mit entlang der Längsachse (L) verteilten und um die Außenfläche (62) umlaufenden ringförmigen ersten Dichtwülsten (63) versehen ist,
- der eine durchgehende Bohrung (66) aufweist, die mit entlang der Längsachse (L) verteilten und ringförmig umlaufenden und auf die Längsachse (L) vorstehenden zweiten Dichtwülsten (67) versehen ist,
wobei der rohrförmige Abschnitt (61) zu seinem ersten Ende (59) hin mit Mitteln versehen ist, die einen Anschlag (68) mit einem kreisrunden Durchlass (69) bilden, der im Durchmesser (D3) kleiner bemessen ist als der Außendurchmesser (D1) des Isolierungsabschnittes (52) des Kabelabschnittes (50).

15. Verbindung nach Anspruch 14,
**dadurch gekennzeichnet,**
**dass** der Anschlag (68) durch einen einstückig angeformten und in der Bohrung (66) auf die Längsachse (L) vorstehenden umlaufenden Kragen (70) gebildet ist.

16. Verbindung nach Anspruch 14,
**dadurch gekennzeichnet,**
**dass** der Anschlag (68) durch einen in den rohrförmigen Abschnitt (61) teilweise eingeformten und in der Bohrung (66) auf die Längsachse (L) vorstehenden Ring (71) gebildet ist, der aus einem Material besteht, das gegenüber dem Material, aus dem der rohrförmige Abschnitt (61) hergestellt ist, eine größere Härte aufweist.

17. Verbindung nach Anspruch 14,
**dadurch gekennzeichnet,**
**dass** der Anschlag (68) **dadurch** gebildet ist, dass der rohrförmige Abschnitt (61) zum ersten Ende (59) hin mit einem Verstärkungsring (72) versehen ist, der den rohrförmigen Abschnitt (61) im Durchmesser (D3) partiell reduziert.

18. Verbindung nach Anspruch 16,
**dadurch gekennzeichnet,**
**dass** der Ring (71) eine flache Scheibe ist, die aus einem harten Kunststoff oder Metall besteht.

19. Verbindung gemäß Anspruch 17,
**dadurch gekennzeichnet,**
**dass** der Verstärkungsring (72) die Form eines flachen Ringes oder eines Drahtringes aufweist.

20. Verbindung nach Anspruch 19,
**dadurch gekennzeichnet,**
**dass** der Verstärkungsring (72) aus Kunststoff oder Metall besteht.

21. Verbindung nach Anspruch 14,
**dadurch gekennzeichnet,**
**dass** an dem zweiten Ende (60) des rohrförmigen Abschnitts (61) ein nach außen von der Längsachse (L) weg vorstehender Ringkragen (65) einstückig angeformt ist.

22. Verbindung nach Anspruch 14,
**dadurch gekennzeichnet,**
**dass** der rohrförmige Abschnitt (61) am ersten Ende (59) eine kegelige Einführfläche (64) aufweist.

## Claims

1. Electrically conductive connection between a cable end piece (5, 105, 205), made from an electrically conductive metal, which has a connection end (6, 106, 206) and tabs (9, 109, 209) for connecting, and a cable end (1, 101, 201), which has a conductor portion (2, 102, 202) and an insulation portion (3, 103, 203) with an outer face (4, 104, 204),
**characterised by**
- a separate sleeve (10, 110, 210), which
- is made from an electrically conductive metal,
- encloses the cable end (1, 101, 201) along a predetermined length,
- is connected to the cable end piece (5, 105, 205),
- has a first end (11, 111, 211), which is arranged proximate to the connection end (6, 106, 206), and has a second end (12, 112, 212), which is arranged distanced to the connection end (6, 106, 206),
- is closed in a sealed manner at its first end (11, 111, 211),
- defines in a portion towards the second end between the sleeve and the outer face (4, 104, 204) of the insulation portion (3, 103, 203) an annular accommodation chamber (14, 114, 214),
- a sealing grommet (16, 116, 216), which
- is arranged at least partially in the accommodation chamber (14, 114, 214) and seals between the sleeve (10, 110, 210) and the outer face (4, 104, 204) of the insulation portion (3, 103, 203) of the cable end (1, 101, 201).

2. Connection according to claim 1,
**characterised in**
**that** the connection end (6, 106, 206) of the cable end piece (5, 105, 205) is formed as an eyelet or a yoke.

3. Connection according to claim 1,
**characterised in**
**that** the sleeve (110, 210) comprises a first sleeve portion (18, 218) having a first bore portion (19, 119), which, concerning its diameter, is adapted to the conductor portion (102, 202), and comprises a second sleeve portion (20, 220), which forms together with a second bore portion (21, 221) the accommodation chamber (114, 214).

4. Connection according to claim 3,
**characterised in**
**that** the first sleeve portion (18, 218) accommodating the conductor portion (102, 202) is connected to the cable end piece (105, 205) via the tabs (109, 209).

5. Connection according to claim 1,
**characterised in**
**that** the sleeve (110, 210) is closed at its first end (111, 211).

6. Connection according to claim 1,
**characterised in**
**that** the conductor portion (2) is directly crimped by means of the tabs (9) to the cable end piece (5),
**that** the sleeve (10) projects passed the tabs (9) in direction to the connection end (6) and is deformed abuttingly in a sealed manner at a transition portion between the tabs (9) and the connection end (6) and
**that** the sleeve (10) is crimped together with the tabs in its transition portion covering the tabs (9).

7. Connection according to claim 6,
**characterised in**
**that** the portion of the sleeve (10), abutting the transition portion, is non-detachably welded at the first end (11) to the cable end piece (5), forming a sealed termination.

8. Connection according to claim 5,
**characterised in**
**that** a flattened portion (23), which is non-detachably connected to the cable end piece (105) by means of a weld (24), follows the closed first end (111) of the sleeve (110).

9. Connection according to claim 3,
**characterised in**
**that** the first sleeve portion (18, 218) and the second sleeve portion (20, 220) differ outside before connecting to the cable end piece (105, 205) concerning their diameter.

10. Connection according to claim 1,
**characterised in**
**that** the sleeve (10, 110, 210) and the cable end piece (5, 105, 205) are made from the same metal.

11. Connection according to claim 3,
**characterised in**
**that** the conductor portion (102, 202) is crimped to the first sleeve portion (18).

12. Connection according to one of claims 1 or 10,
**characterised in**
**that** the metal is a copper material.

13. Connection according to one of claims 1 or 3,
**characterised in**
**that** the sleeve (210) is crimped by means of the tabs (209) of the cable end piece (205) to the conductor portion (202) resting in the sleeve (210).

14. Connection according to one of claims 1 to 13,
**characterised in**
**that** a sealing grommet (58, 58a, 58b) of a soft elastic material is provided for an electric cable portion (50), having a conductor portion (51) and an insulation portion (52), enclosing this with a predetermined outer diameter (D1), which serves for sealing the cable portion (50) relative to a component (55) having an insertion bore (56), into which the cable portion (50) is inserted, wherein the sealing grommet (58, 58a, 58b) comprises a tubular portion (61),
- which extends along a longitudinal axis (L) between a first end (59) and a second end (60),
- which has an outer face (62), which is provided with annular first sealing beads (63), which are distributed along the longitudinal axis (L) and extend around the outer face (62),
- which has a through extending bore (66), which is provided with second sealing beads (67), distributed along the longitudinal axis (L) and extending annularly and projecting towards the longitudinal axis (L),
wherein the tubular portion (61) is provided towards its first end (59) with means, which form an abutment (68) with a circular through opening (69), which diameter (D3) is smaller than the outer diameter (D1) of the insulation portion (52) of the cable portion (50).

15. Connection according to claim 14,
**characterised in**
**that** the abutment (68) is formed by a collar (70), formed integrally and extending circumferentially in the bore (66) in a projecting manner towards the longitudinal axis (L).

16. Connection according to claim 14,
**characterised in**
**that** the abutment (68) is formed by a ring (71), partially insert moulded in the tubular portion (61) and projecting in the bore (66) towards the longitudinal axis (L), and which is made from a material, which, compared to the material from which the tubular portion (61) is formed, has a greater hardness.

17. Connection according to claim 14,
**characterised in**
**that** the abutment (68) is formed such, that the tubular portion (61) is provided towards the first end (59) with a reinforcement ring (72), which reduces partially the tubular portion (61) concerning its diameter (D3).

18. Connection according to claim 16,
**characterised in**
**that** the ring (71) is a flat disc, which is made from a hard synthetic material or a metal.

19. Connection according to claim 17,
**characterised in**
**that** the reinforcement ring (72) has the form of a flat ring or a wire ring.

20. Connection according to claim 19,
**characterised in**
**that** the reinforcement ring (72) is made from a synthetic material or a metal.

21. Connection according to claim 14,
**characterised in**
**that** an annular collar (65), projecting outwardly away from the longitudinal axis (L), is formed integrally on the second end (60) of the tubular portion (61).

22. Connection according to claim 14,
**characterised in**
**that** the tubular portion (61) has on the first end (59) a conical insertion face (64).

## Revendications

1. Connexion conductrice d'électricité entre une extrémité de câble (5,105,205) constituée d'un métal conducteur d'électricité, qui présente une extrémité de raccordement (6,106,206) et des languettes (9,109,209) en vue de la connexion, et une borne (1,101,201), qui présente une portion conductrice (2,202,202) et une portion d'isolation (3,103,203) comportant une surface extérieure (4,104,204),
**caractérisée par**
- une douille (10,110,210) séparée, qui
- est constituée d'un métal conducteur d'électricité,
- enveloppe la borne (1,101,201) sur une longueur prédéterminée,
- est reliée à l'extrémité de câble (5,105,205),
- présente une première extrémité (11,111,211), qui est disposée à proximité de l'extrémité de raccordement (6,106,206), et une deuxième extrémité (12,112,212), qui est disposée à distance de l'extrémité de raccordement (6, 106, 206) ,
- est obturée de manière étanche à sa première extrémité (11,111,211),
- forme dans une portion allant vers la deuxième extrémité un espace de réceptacle (14,114,214) annulaire entre elle-même et la surface extérieure (4,104,204) de la portion d'isolation (3,103,203),
- un passe câble (16,116,216), qui
- est disposé au moins partiellement dans l'espace de réceptacle (14,114,214) et isole entre la douille (10,110,210) et la surface extérieure (4,104,204) de la section d'isolation (3,103,2203) de la borne (1,101,201).

2. Connexion selon la revendication 1,
**caractérisée en ce que**
l'extrémité de raccordement (6,106,206) de l'extrémité de câble (5,105,205) est façonnée comme un oeillet ou une fourche.

3. Connexion selon la revendication 1,
**caractérisée en ce que**
la douille (110,210) comprend une première portion de douille (18,218), qui présente une première portion d'alésage (19,119), qui est adaptée par son diamètre à la portion conductrice (102,202), et une deuxième portion de douille (20,220), qui forme l'espace de réceptacle (114,214) avec une deuxième portion d'alésage (21,221).

4. Connexion selon la revendication 3,
**caractérisée en ce que**
la première portion de douille (18,218) renfermant la portion conductrice (102,202) est reliée à l'extrémité de câble (105,205) par l'intermédiaire de languettes (109,209).

5. Connexion selon la revendication 1,
**caractérisée en ce que**
la douille (110,210) est fermée à sa première extrémité (111,211).

6. Connexion selon la revendication 1,
**caractérisée en ce que**
la portion conductrice (2) est reliée par sertissage directement via les languettes (9) à l'extrémité de câble (5),
la douille (10) dépasse par-dessus les languettes (9) dans la direction de l'extrémité de raccordement (6) et est déformée de manière à venir reposer de manière étanche sur une portion de transition entre les languettes (9) et l'extrémité de raccordement (6) et
la douille (10) est déformée par écrasement conjointement aux languettes dans sa portion de recouvrement recouvrant les languettes (9).

7. Connexion selon la revendication 6,
**caractérisée en ce que**
la portion de la douille (10) reposant sur la portion de transition est soudée de manière inamovible à la portion de transition en formant une isolation étanche à la première extrémité (11) dans le sens de l'extrémité de câble (5).

8. Connexion selon la revendication 5,
**caractérisée en ce que**
à la première extrémité fermée (111) de la douille, une portion (23) aplatie se rattache, laquelle est reliée de manière inamovible à l'extrémité de câble (105) par une soudure (24).

9. Connexion selon la revendication 3,
**caractérisée en ce que**
la première portion de douille (18,218) et la deuxième portion de douille (20,220) ont un diamètre externe différent avant la liaison avec l'extrémité de câble (105,205).

10. Connexion selon la revendication 1,
**caractérisée en ce que**
la douille (10,110,210) et l'extrémité de câble (5,105,205) sont constituées du même métal.

11. Connexion selon la revendication 3,
**caractérisée en ce que**
la portion conductrice (102,202) est reliée par sertissage à la première portion de douille (18).

12. Connexion selon une des revendications 1 ou 10,
**caractérisée en ce que**
le métal est un matériau cuivre.

13. Connexion selon une des revendications 1 ou 3,
**caractérisée en ce que**
la douille (210) est reliée par sertissage par l'intermédiaire des languettes (209) de l'extrémité de câble (205) avec la portion conductrice (202) logée dans la douille (210).

14. Connexion selon une des revendications 1 à 13,
**caractérisée en ce que**
un passe câble (58,58a,58b) constitué d'un matériau plastique souple destiné à un tronçon de câble électrique (50), qui présente une portion conductrice (51) et une portion d'isolation (52) enveloppant celle-ci avec un diamètre extérieur (D1) prescrit, qui sert à isoler le tronçon de câble (50) par rapport à un composant (55) présentant un alésage d'insertion (56), dans lequel le tronçon de câble (50) est inséré, est prévu
moyennant quoi le passe câble (58,58a,58b) comprend une portion tubulaire (61),
- qui s'étend le long d'un axe longitudinal (L) entre une première extrémité (59) et une deuxième extrémité (60),
- qui présente une surface extérieure (62), qui est pourvue de premiers bourrelets d'étanchéité (63) annulaires entourant la surface extérieure (62) et répartis le long de l'axe longitudinal (L),
- qui présente un alésage (66) traversant, qui est pourvu de deuxièmes bourrelets d'étanchéités (67) faisant saillie sur l'axe longitudinal (L), répartis le long de l'axe longitudinal (L) et annulaires sur la circonférence,
moyennant quoi
la portion tubulaire (61) est pourvue en allant vers sa première extrémité (59) de moyens, qui forment une butée (68) avec un passage circulaire (69), ayant un diamètre (D3) plus petit que le diamètre extérieur (D1) de la portion d'isolation (52) du tronçon de câble (50).

15. Connexion selon la revendication 14,
**caractérisée en ce que**
la butée (68) est formée par un collier (70) faisant saillie sur la circonférence sur l'axe longitudinal (L) dans l'alésage(66) et façonné en un seul bloc.

16. Connexion selon la revendication 14,
**caractérisée en ce que**
la butée (68) est formée par un anneau (71) faisant saillie sur l'axe longitudinal (L) dans l'alésage (66) et partiellement façonné dans la portion tubulaire (61), qui est constitué d'un matériau, qui présente une plus grande dureté par rapport au matériau, dans lequel la portion tubulaire (61) est fabriquée.

17. Connexion selon la revendication 14,
**caractérisée en ce que**
la butée (68) est formée en pourvoyant la portion tubulaire (61) allant vers la première extrémité (59) d'un anneau de renforcement (72), qui réduit partiellement le diamètre de la portion tubulaire (61).

18. Connexion selon la revendication 16,
**caractérisée en ce que**
l'anneau (71) est un disque plat, qui est constitué d'un plastique dur ou d'un métal.

19. Connexion selon la revendication 17,
**caractérisée en ce que**
l'anneau de renforcement (72) présente la forme d'un anneau plat ou d'un anneau de fil.

20. Connexion selon la revendication 189,
**caractérisée en ce que**
l'anneau de renforcement (72) est constitué d'un plastique ou d'un métal.

21. Connexion selon la revendication 14,
**caractérisée en ce que**
à la deuxième extrémité (60) de la portion tubulaire (61), un collier annulaire (65) faisant saillie en s'écartant de l'axe longitudinal (L) vers l'extérieur est façonné en un seul bloc.

22. Connexion selon la revendication 14,
**caractérisée en ce que**
la portion tubulaire (61) présente à la première extrémité (59) une surface d'insertion conique (64).
